# EUROPEAN PATENT SPECIFICATION

(11) **EP 0 926 397 B1**
(45) Date of publication and mention of the grant of the patent: **20.08.2003**
(21) Application number: 98123449.5
(22) Date of filing: 11.12.1998
(51) Int. Cl.: F16H 48/20, B60K 23/04

(54) **Drive unit for vehicles used in the field of agriculture, plant nursery management, gardening or the like**
Antriebseinheit für in der Landwirtschaft, in der Pflanzenzüchtung, im Gartenbau und ähnlichem eingesetzte Fahrzeuge
Système d'entraînement pour véhicules utilisés dans le domaine de l'agriculture, pépinière, jardinage et similaire

(30) Priority: 23.12.1997 IT PD970292
(43) Date of publication of application: 30.06.1999
(73) Proprietor: ANTONIO CARRARO S.p.A., 35011 Campodarsego (Padova) (IT)
(72) Inventor: Martignon, Girolamo, 35010 Borgoricco (Prov. of Padova) (IT)
(74) Representative: Modiano, Guido, Dr.-Ing.

(56) References cited:
- EP-A- 0 548 853
- DE-A- 3 538 802
- US-A- 5 366 040
- US-A- 5 536 219

## Description

The present invention relates to a drive unit for vehicles used in the field of agriculture, plant nursery management, gardening or the like.

It is known that vehicles used in the field of agriculture, plant nursery management, gardening or the like are currently braked by using drum brakes with expanding shoes, which often produce jamming or abrupt braking.

This behavior obviously limits the manoeuvrability of the vehicle especially when it is necessary to make one's way through confined spaces in working between rows of, for example, vineyards or orchards.

Moreover, in the course of time the plays of the mechanical components must be eliminated by replacing said components, since no automatic compensation is possible.

However, currently it is particularly complicated to manage adequately and in small spaces the engagement and disengagement of the drive or the locking of the differential.

This is particularly felt with combined systems which provide for the clustering of the differential, of the device for engaging and disengaging the drive and for locking said differential, as well as the brakes.

A generic driving system with a braking system incorporated is known from US-A- 5 366 040.

The aim of the present invention is to provide an optimum integration among the differential, the devices dedicated thereto and the brakes.

Within the scope of this aim, an object of the present invention is to provide a drive unit in which management of the differential is optimum and the braking device is also optimum in terms of smooth and safe braking.

Another object of the present invention is to provide a drive unit provided with a braking system in which plays due to wear can be compensated for automatically within certain limits.

Another important object of the present invention is to provide a drive unit which allows, by virtue of its structure and consequent size, to mount small-diameter wheels on the axle.

Another important object of the present invention is to provide a drive unit in which the brake is entirely isolated from atmospheric phenomena and from environmental effects in general.

Another object of the present invention is to provide a drive unit which is particularly sturdy and flexible in . its application to different vehicles.

Another object of the present invention is to provide a drive unit which can be manufactured with known technologies.

This aim, these objects and others which will become apparent hereinafter are achieved by a drive unit for vehicles, according to the present invention which has the features set forth in claim 1.

Further characteristics and advantages of the present invention will become apparent from the following detailed description of an embodiment thereof, illustrated by way of a non-limitative example in the accompanying drawings, wherein:
Figure 1 is a partially sectional view of a drive unit according to the invention;
Figure 2 is a general view of the unit of Figure 1;
Figures 3 and 4 are front views of the unit of Figure 1;
Figure 5 is a schematic view of a hydraulic actuation system which is suitable for the unit of Figure 1;
Figure 6 is a schematic view of a braking system which is suitable for the unit of Figure 1.

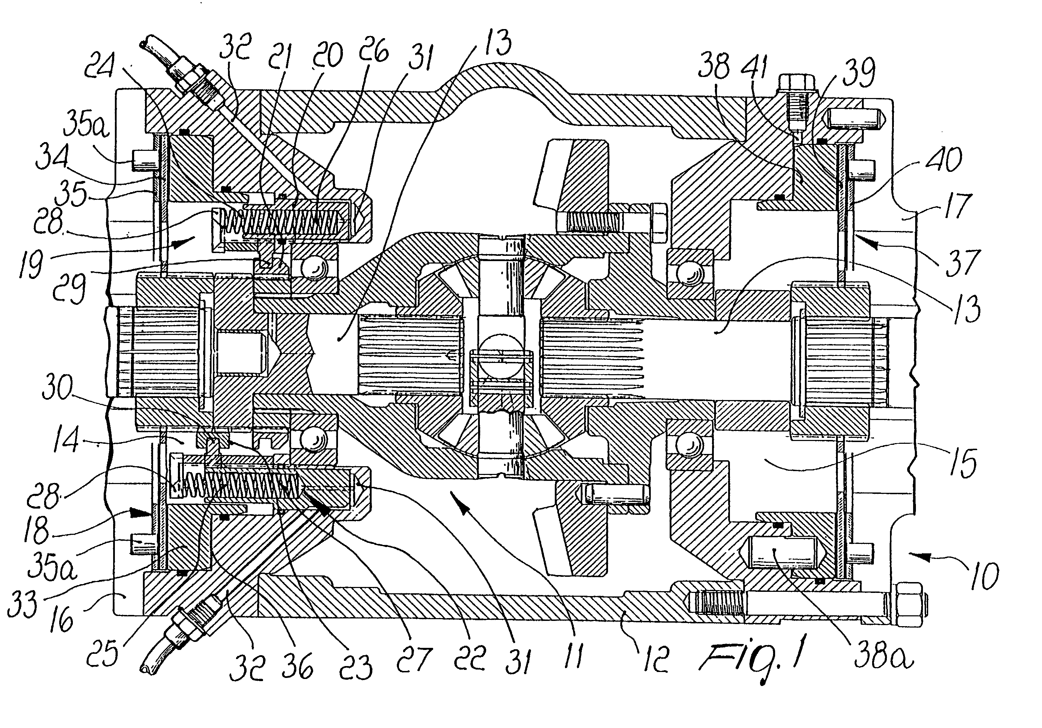

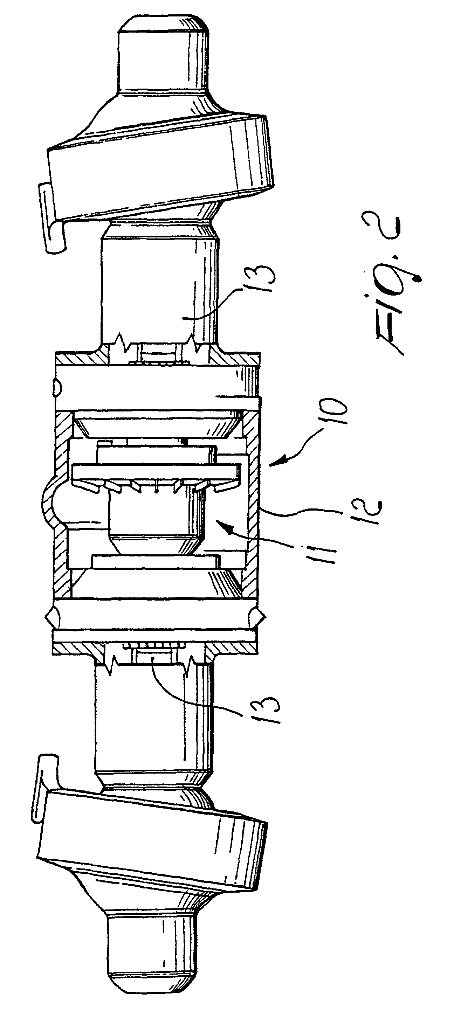

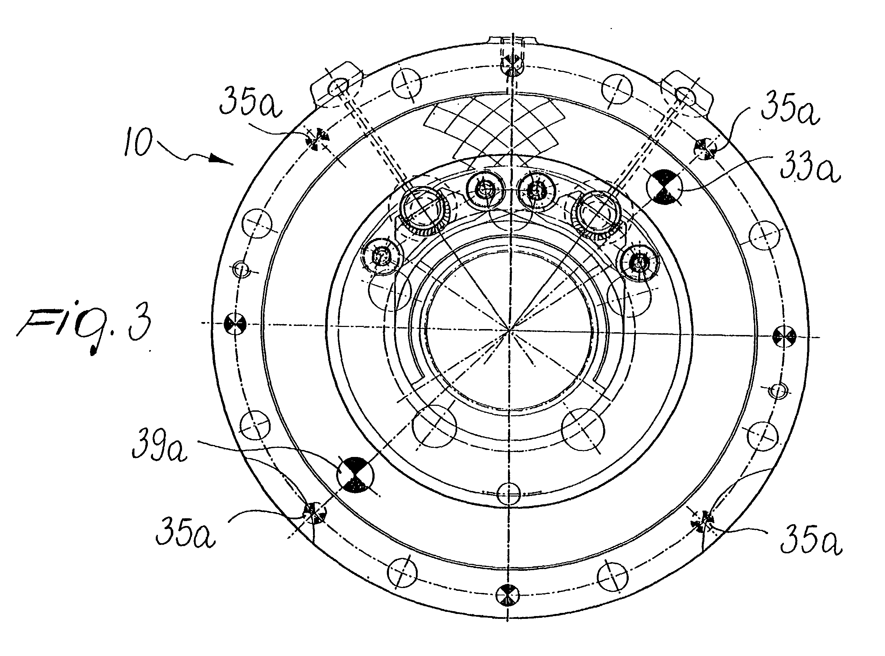

With particular reference to Figures 1 to 4, a drive unit for vehicles used in the field of agriculture, plant nursery management, gardening or the like according to the invention is generally designated by the reference numeral 10.

In particular, the drive unit 10 comprises a differential unit 11 which is contained in a sealed case designated by the reference numeral 12.

The case 12 is shaped, at portions thereof which lie transversely to transmission shafts, designated by the reference numeral 13 herein, so as to form respectively at least a seat, preferably a first seat 14 and a second seat 15 which are mutually opposite and are closed by corresponding covers, designated by the reference numerals 16 and 17 respectively.

In particular, an oil-bath disk brake, generally designated by the reference numeral 18, and a device 19 for engaging/disengaging the drive and for locking the differential unit 11 are accommodated and integrated in the first seat 14.

In particular, in this case the device 19 comprises two actuators: a first actuator 20, which is associated with a first ring gear 21 for locking the differential, and a second actuator 22, which is associated with a respective second ring gear 23 for disengaging the drive.

In this case, the drive unit 10 comprises elastic counterthrust means for the first and second actuators 20 and 22, which are constituted by corresponding helical springs, designated by the reference numerals 24 and 25 respectively, which are at least partially inserted in corresponding seats 26 and 27 formed directly in said actuators 20 and 22.

The fixed base of each one of the springs 24 and 25 is constituted by an element 28 rigidly coupled to the case 12.

The spring 24 is also suitable to mechanically release the differential 11, while the spring 25 provides the mechanical engagement of the drive, improving safety in case of any malfunction of the hydraulic system (described hereinafter) or of the electric system, which is not illustrated for the sake of simplicity.

In particular, in this embodiment the first actuator 20 and the second actuator 22 are respectively connected to the first ring gear 21 and to the second ring gear 23 by means of a corresponding actuation fork 29, 30.

In particular, the actuator 20 and the actuator 22 form, each one in association with the surface of the first seat 14, a corresponding first chamber 31 which is connected to a corresponding duct 32 for introducing the pressure transfer liquid (usually oil).

The disk brake 18, in this case, is constituted by a flanged element 33 which is suitable to pack a disk 34 in association with a circular element 35 which is fixed to the cover 16 (particularly with respect to axial rotations) by means of four pins 35a.

In particular, in this case the flanged element 33 forms, in association with the corresponding surface of the first seat 14, a second chamber 36 which is suitable for the introduction of the pressure transfer fluid (oil) and is connected to the supply by a feed duct which is not shown.

In this case, at the second seat 15 there is provided another oil-bath disk brake which is fully similar to the one described above and generally designated by the reference numeral 37.

The brake 37, in particular, comprises a flanged element 38, a packing disk 39 (which is the actual braking disk), and a fixed disk 40, which are fully similar to the ones described above; the feed duct, designated by the reference numeral 41, is also visible for said brake.

In this embodiment, the flanged elements 33 and 38 are locked against axial rotation by corresponding pairs of pins, designated by the reference numerals 33a and 38a respectively.

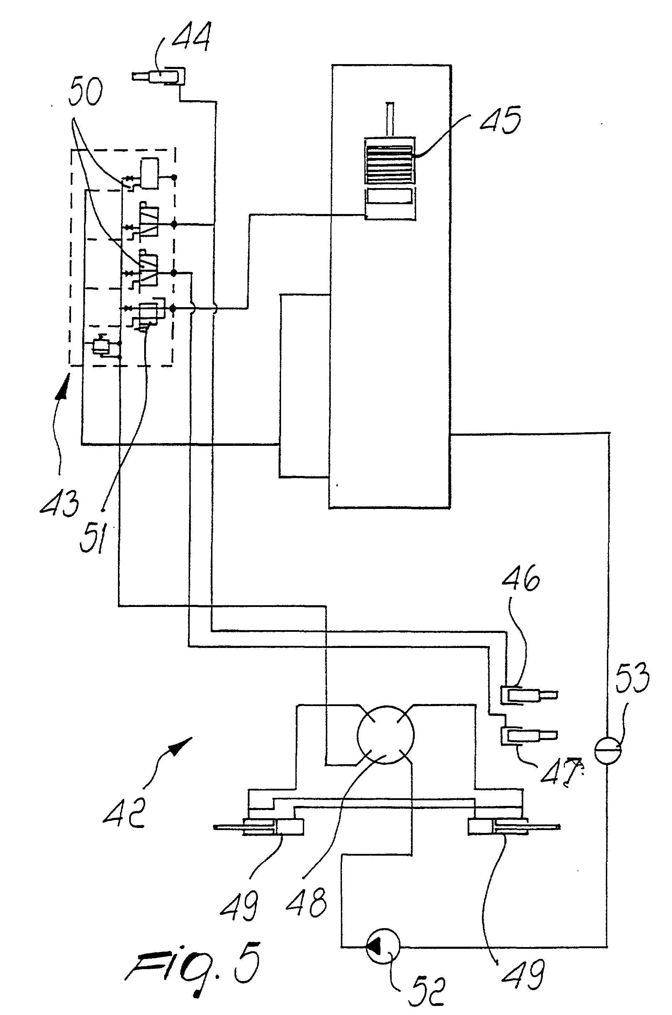

With particular reference to Figure 5, a hydraulic system suitable for the drive unit 10 is generally designated by the reference numeral 42.

The system 42 comprises a valve unit, generally designated by the reference numeral 43, which is connected so as to control: an actuator for locking the rear differential 44, an actuator 45 for the clutch (related to the rear power take-off), an actuator 46 for locking the front differential, an actuator 47 for disengaging the front drive, and a hydraulic power steering unit, generally designated by the reference numeral 48, which acts on double-acting cylinders 49 of the steering system.

The valve unit 43 comprises electrohydraulic valves 50 and a proportional valve 51, managed by electronic control means of a per se known type, not shown; said proportional valve is provided to control the clutch related to the above-mentioned rear power take-off.

A fixed-displacement pump 52 with an intake filter 53 is associated with the hydraulic power steering unit 48 in the system 42.

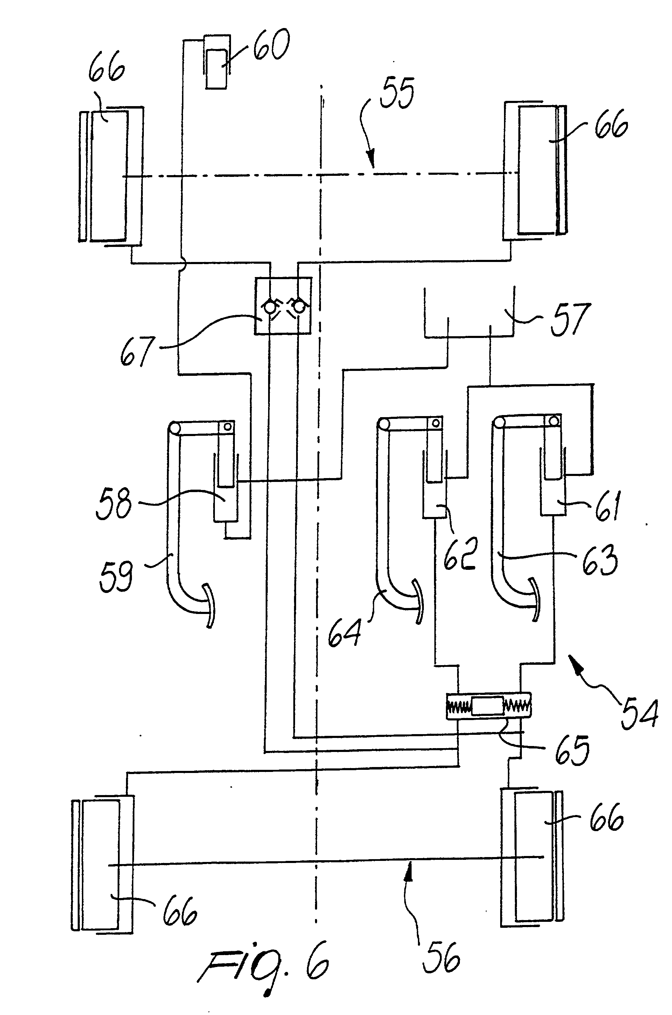

With particular reference to Figure 6, a braking system particularly for the drive unit 10 is generally designated by the reference numeral 54.

Figure 6 illustrates the front and rear axles, generally designated by the reference numerals 55 and 56 respectively.

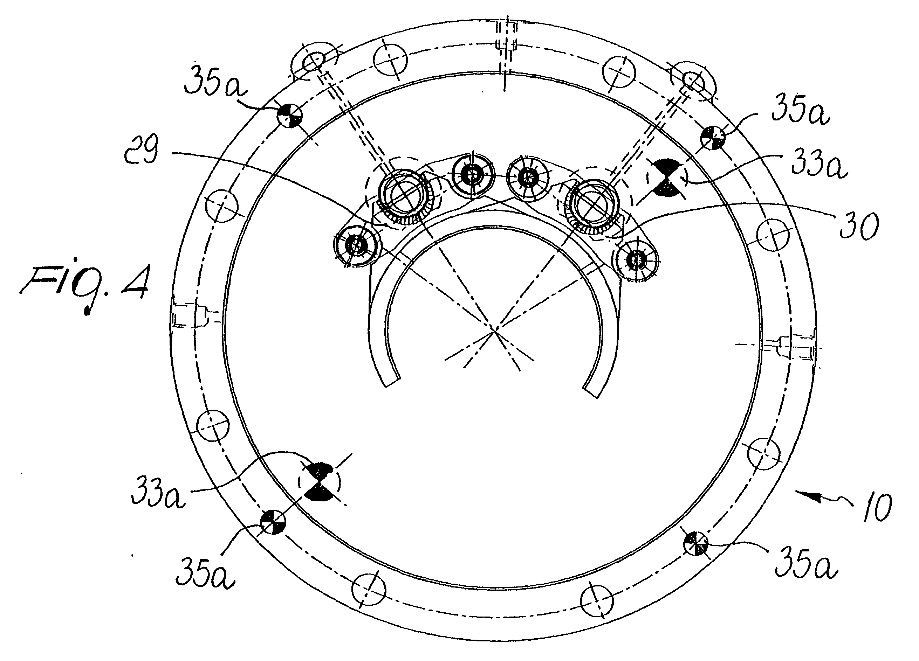

The system 54 comprises an atmospheric reservoir 57 which is connected to three single-acting cylinders: a cylinder 58 for the clutch pedal 59 connected in output to a single-acting cylinder 60 which actuates a clutch disk pusher, not shown; and two cylinders, designated by the reference numerals 61 and 62 respectively, for corresponding pedals 63 and 64 for the brakes which are connected by means of a pressure compensation device 65 to the brakes, shown schematically in Figure 4 and designated by the reference numeral 66.

In particular, the connection to the front brakes is provided through a reverse locking valve 67 which is suitable to produce a steering braking action on the rear wheels.

In practice it has been observed that the present invention has achieved the intended aim and objects.

It should in fact be noted that the integration of one of the disk brakes with the differential engagement and disengagement device has led to a considerable saving in terms of overall dimensions, further ensuring greater constructive simplicity and a reduced number of components.

The reduced number of components therefore also entails a reduced production cost which allows the drive unit according to the present invention to be competitive with respect to commercially available ones.

It should also be noted that the drive unit according to the invention allows optimum management of the differential engagement and disengagement device while ensuring a smooth and safe braking action.

The use of the springs as mechanical actuation systems for releasing the differential and engaging the drive allows to ensure a minimum functionality of the vehicle also in case of hydraulic or electric failure.

The present invention is susceptible of numerous modifications and variations, all of which are within the scope of the appended claims.

The materials and the dimensions may be any according to requirements.

The disclosures in Italian Patent Application No. PD97A000292 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A drive unit for vehicles used in the field of agriculture, plant nursery management, gardening or the like, comprising at least one differential unit (11), which is contained in a sealed case (12), an oil-bath disk brake (18), and a device (19) for engaging/disengaging the drive and for locking the differential, said case (12) comprising at least one portion which forms a first seat (14) in which the oil-bath disk brake (18) is accommodated, **characterized in that** said device (19) for engaging/disengaging the drive and for locking the differential is also accommodated in said first seat (14) and is integrated therein along with said oil-bath disk brake (18).

2. The drive unit according to claim 1, **characterized in that** it comprises at least two actuators, the first actuator (20) being associated with a first ring gear (21) for locking said differential, the second actuator (22) being associated with a second ring gear (23) for disengaging the drive.

3. The drive unit according to claim 1, **characterized in that** it comprises elastic counterthrust means (24, 25)for said at least two actuators (20, 22).

4. The drive unit according to claim 3, **characterized in that** said elastic counterthrust means are constituted by helical springs (24, 25) which are accommodated at least partially in corresponding seats (26, 27)formed in said actuators (20, 22), their base (28) being fixed to said case (12), said springs (24, 25) providing mechanical actuations for releasing the differential unit (11) and for engaging the drive respectively.

5. The drive unit according to claim 2, **characterized in that** said at least two actuators (20, 22) are connected by means of a related actuation fork (29, 30) which is coupled to a corresponding ring gear (21, 23).

6. The drive unit according to claim 2, **characterized in that** each one of said at least two actuators (20, 22) forms, at the surface that forms said first seat (14) and in cooperation therewith, a corresponding first chamber (31) which is connected to a corresponding duct (32) for introducing a pressure transfer fluid.

7. The drive unit according to claim 1, **characterized in that** said brake 18) comprises a flanged element (33) which is suitable to pack, in cooperation with a fixed circular element (35), a disk (34) interposed between them.

8. The drive unit according to claim 7, **characterized in that** said flanged element (33) forms a second annular chamber (36) in association with the corresponding surface that forms said first seat (14).

9. The drive unit according to claim 1, **characterized in that** it comprises further portion which lies transversely to transmission shafts (13), forming a second closed seat (15) which accommodates another oil-bath disk brake (37) arranged substantially opposite to the brake that is integrated with said drive engagement/disengagement device (19), said first ring gear (21) and said helical springs (24, 25).

10. The drive unit of claim 1, **characterized in that** it further comprises a hydraulic system (42) having a valve unit (43) which is connected so as to control: an actuator for locking a rear differential (44); an actuator (45) for a clutch; an actuator (46) for locking a front differential; an actuator (47) for disengaging the front drive; and a hydraulic power steering unit (48) which acts on double-acting cylinders (49) of the steering system, said valve unit (43) comprising one or more electrohydraulic valves (50) and at least one proportional valve (51), managed by electronic control means, said proportional valve (51) being provided to actuate the clutch related to the rear power take-off of the vehicle, said hydraulic power steering unit (48) being associated with a fixed-displacement pump (52) with an intake filter (53).

11. The drive unit of claim 1, **characterized in that** it further comprises a braking system (54) having an atmospheric reservoir (57) which is connected to three single-acting cylinders: one cylinder (58) for a clutch pedal (59) which is connected in output to another single-acting cylinder (60) for controlling a clutch disk pusher, and two cylinders (61, 62) for corresponding pedals (63, 64) for the brakes, which are connected to the brakes by means of a pressure compensation device (65), the connection to the front brakes being provided through a reverse locking valve (67) which is adapted to provide a steering braking action on the rear wheels.

## Patentansprüche

1. Antriebseinheit für in der Landwirtschaft, in der Pflanzenzüchtung, im Gartenbau oder ähnlichem eingesetzte Fahrzeuge, umfassend
zumindest eine Differentialeinheit (11), die in einem abgedichteten Gehäuse (12) enthalten ist, eine Ölbadscheibenbremse (18) und eine Vorrichtung (19) zum Einkuppeln/Auskuppeln des Antriebs und zum Sperren des Differentials, wobei das Gehäuse (12) zumindest einen Teil enthält, der einen ersten Sitz (14) bildet, in dem die Ölbadscheibenbremse (18) untergebracht ist, **dadurch gekennzeichnet, dass** die Vorrichtung (19) zum Einkuppeln/Auskuppeln des Antriebs und zum Sperren des Differentials ebenfalls in dem ersten Sitz (14) untergebracht ist und in diesem zusammen mit der Ölbadscheibenbremse (18) integriert ist.

2. Antriebseinheit nach Anspruch 1, **dadurch gekennzeichnet, dass** sie zumindest zwei Betätigungselemente umfasst, von denen das erste Betätigungselement (20) mit einem ersten Tellerrad (21) zum Sperren des Differentials verbunden ist und das zweite Betätigungselement (22) mit einem zweiten Tellerrad (23) zum Auskuppeln des Antriebs verbunden ist.

3. Antriebseinheit nach Anspruch 1, **dadurch gekennzeichnet, dass** sie elastische Gegenschubmittel (24, 25) für die zumindest zwei Betätigungselemente (20, 22) umfasst.

4. Antriebseinheit nach Anspruch 3, **dadurch gekennzeichnet, dass** die elastischen Gegenschubmittel aus Schraubenfedern (24, 25) bestehen, die zumindest teilweise in entsprechenden in den Betätigungselementen (20, 22) ausgebildeten Sitzen (26, 27) untergebracht sind, wobei deren Basis (28) an dem Gehäuse (12) befestigt ist, die Federn (24, 25) jeweils mechanische Betätiger zum Entriegeln der Differentialeinheit (11) und zum Einkuppeln des Antriebs bilden.

5. Antriebseinheit nach Anspruch 2, **dadurch gekennzeichnet, dass** die zumindest zwei Betätigungselemente (20, 22) mittels einer zugehörigen Betätigungsgabel (29, 30) verbunden sind, die an ein entsprechendes Tellerrad (21, 23) gekoppelt ist.

6. Antriebseinheit nach Anspruch 2, **dadurch gekennzeichnet, dass** jedes der zumindest zwei Betätigungselemente (20, 22) auf der Fläche, die den ersten Sitz (14) bildet und zusammen mit diesem, eine entsprechende erste Kammer (31) bildet, die mit einer entsprechenden Leitung (32) zum Einleiten eines Druckübertragungsfluids verbunden ist.

7. Antriebseinheit nach Anspruch 1, **dadurch gekennzeichnet, dass** die Bremse (18) ein Flanschelement (33) umfasst, das dazu geeignet ist, zusammen mit einem festen kreisförmigen Element (35), eine Scheibe (34) zu halten, die zwischen dem Flanschelement (33) und dem kreisförmigen Element (35) angeordnet ist.

8. Antriebseinheit nach Anspruch 7, **dadurch gekennzeichnet, dass** das Flanschelement (33) zusammen mit der entsprechenden Fläche, die den ersten Sitz (14) bildet, eine zweite ringförmige Kammer (36) bildet.

9. Antriebseinheit nach Anspruch 1, **dadurch gekennzeichnet, dass** sie ferner einen Teil umfasst, der quer zu Antriebswellen (13) verläuft und einen zweiten geschlossenen Sitz (15) bildet, der eine weitere Ölbadscheibenbremse (37) aufnimmt, die im Wesentlichen entgegengesetzt zu der Bremse angeordnet ist, die mit der Vorrichtung (19) zum Einkuppeln/Auskuppeln des Antriebs, dem ersten Tellerrad (21) und den Schraubenfedern (24, 25) integriert ist.

10. Antriebseinheit des Anspruchs 1, **dadurch gekennzeichnet, dass** sie ferner ein hydraulisches System (42) mit einer Ventileinheit (43) umfasst, das verbunden ist, um ein Betätigungselement zum Sperren eines hinteren Differentials (44), ein Betätigungselement (47) für eine Kupplung, ein Betätigungselement zum Sperren eines vorderen Differentials, ein Betätigungselement (47) zum Abschalten des Vorderantriebs und eine hydraulische Lenkkrafteinheit (48) zu steuern, die auf doppeltwirkende Zylinder (49) der Lenkung wirkt, wobei die Ventileinheit (43) ein oder mehrere elektrohydraulische Ventile (50) und zumindest ein Proportionalventil (51) umfasst, die durch elektronische Steuermittel kontrolliert werden, wobei das Proportionalventil (51) die Kupplung betätigt, die mit der hinteren Abtriebsseite verbunden ist, wobei die hydraulische Lenkkrafteinheit (48) mit einer einen Ansaugfilter (53) enthaltenen festen Verdrängerpumpe (52) verbunden ist.

11. Antriebseinheit des Anspruchs 1, **dadurch gekennzeichnet, dass** sie ferner ein Bremssystem (54) mit einem atmosphärischen Behälter (57) umfasst, der mit drei einfachwirkenden Zylindern verbunden ist: einem Zylinder (58) für ein Kupplungspedal (59), der ausgangsseitig mit einem weiteren einfachwirkenden Zylinder (60) zum Steuern eines Kupplungsscheibenschiebers verbunden ist, und zwei Zylindern (61, 62) für entsprechende Pedale (63, 64) für die Bremsen, welche mittels einer Druckausgleichsvorrichtung (65) mit den Bremsen verbunden sind, wobei die Verbindung zu den Vorderbremsen durch ein Rückwärts-Sperrventil (67) erfolgt, das dazu geeignet ist, eine Lenk-Brems-Wirkung auf die Hinterräder auszuüben.

## Revendications

1. Unité d'entraînement pour des véhicules utilisés dans le domaine de l'agriculture, des pépinières, du jardinage ou analogue, comprenant au moins une unité différentielle (11) qui est contenue dans un boîtier étanche (12), un frein à disque à bain d'huile (18), et un dispositif (19) pour engager/désengager l'entraînement et pour verrouiller le différentiel, ledit boîtier (12) comprenant au moins une partie qui forme un premier siège (14) dans lequel le frein à disque à bain d'huile (18) est logé,
**caractérisée en ce que** ledit dispositif (19) pour engager/désengager l'entraînement et pour verrouiller le différentiel est également logé dans ledit premier siège (14) et est intégré dans celui-ci ainsi que ledit frein à disque à bain d'huile (18).

2. Unité d'entraînement selon la revendication 1,
**caractérisée en ce qu'**elle comprend au moins deux actionneurs, le premier actionneur (20) étant associé à une première couronne (21) pour verrouiller ledit différentiel, le second actionneur (22) étant associé à une seconde couronne (23) pour désengager l'entraînement.

3. Unité d'entraînement selon la revendication 1,
**caractérisée en ce qu'**elle comprend des moyens de contre-poussée élastiques (24, 25) pour lesdits au moins deux actionneurs (20, 22).

4. Unité d'entraînement selon la revendication 3,
**caractérisée en ce que** lesdits moyens de contre-poussée élastiques sont constitués par des ressorts hélicoïdaux (24, 25) qui sont logés au moins partiellement dans des sièges correspondants (26, 27) formés dans lesdits actionneurs (20, 22), leur base (28) étant fixée audit boîtier (12), lesdits ressorts (24, 25) fournissant des actionnements mécaniques pour libérer l'unité différentielle (11) et pour engager l'entraînement, respectivement.

5. Unité d'entraînement selon la revendication 2,
**caractérisée en ce que** lesdits au moins deux actionneurs (20, 22) sont reliés au moyen d'une fourche d'actionnement liée (29, 30) qui est couplée à une couronne correspondante (21, 23).

6. Unité d'entraînement selon la revendication 2,
**caractérisée en ce que** chacun desdits au moins deux actionneurs (20, 22) forme, au niveau de la surface que forme ledit premier siège (14) et en coopération avec celui-ci, une première chambre correspondante (31) qui est reliée à un conduit correspondant (32) pour introduire un fluide de transfert de pression.

7. Unité d'entraînement selon la revendication 1,
**caractérisée en ce que** ledit frein (18) comprend un élément à rebord (33) qui est approprié pour recevoir, en coopération avec un élément circulaire fixe (35), un disque (34) disposé entre eux.

8. Unité d'entraînement selon la revendication 7,
**caractérisée en ce que** ledit élément à rebord (33) forme une seconde chambre annulaire (36) en association avec la surface correspondante que forme ledit premier siège (14).

9. Unité d'entraînement selon la revendication 1,
**caractérisée en ce qu'**elle comprend une autre partie qui est transversale aux arbres de transmission (13), formant un second siège fermé (15) qui reçoit un autre frein à disque à bain d'huile (37) agencé de façon sensiblement opposée au frein qui est intégré avec ledit dispositif d'engagement/désengagement (19) de l'entraînement, ladite première couronne (21) et lesdits ressorts hélicoïdaux (24, 25).

10. Unité d'entraînement selon la revendication 1,
**caractérisée en ce qu'**elle comprend de plus un système hydraulique (42) ayant une unité de valve (43) qui est reliée de façon à commander : un actionneur pour verrouiller un différentiel arrière (44) ; un actionneur (45) pour un embrayage ; un actionneur (46) pour verrouiller un différentiel avant ; un actionneur (47) pour désengager l'entraînement avant ; et une unité de direction assistée hydraulique (48) qui agit sur des vérins à double action (49) du système de direction, ladite unité de valve (43) comprenant une ou plusieurs valves électrohydrauliques (50) et au moins une valve proportionnelle (51), gérées par des moyens de commande électroniques, ladite valve proportionnelle (51) étant prévue pour actionner l'embrayage lié à la prise de force arrière du véhicule, ladite unité de direction assistée hydraulique (48) étant associée à une pompe de déplacement fixe (52) ayant un filtre d'admission (53).

11. Unité d'entraînement selon la revendication 1,
**caractérisée en ce qu'**elle comprend de plus un système de freinage (54) ayant un réservoir atmosphérique (57) qui est relié à trois vérins à action simple : un vérin (58) pour une pédale d'embrayage (59) qui est reliée en sortie à un autre vérin à action simple (60) pour commander un poussoir de disque d'embrayage, et deux vérins (61, 62) pour des pédales correspondantes (63, 64) pour les freins, qui sont reliées aux freins au moyen d'un dispositif de compensation de pression (65), la liaison aux freins avant étant prévue via une valve de verrouillage inverse (67) qui est adaptée pour fournir une action de freinage de direction sur les roues arrière.
